# EUROPEAN PATENT APPLICATION

(11) **EP 2 564 733 A1**
(43) Date of publication of application: **06.03.2013**
(21) Application number: 12179594.2
(22) Date of filing: 07.08.2012
(51) Int. Cl.: A47J 17/02, A47J 25/00

(54) **Culinary utensil (Corn scraper)**

(30) Priority: 29.08.2011 US 201113219793
(71) Applicant: Maxpat Trading & Marketing (Far East) Limited, Kowloon, Hong Kong (CN)
(72) Inventor: Yu Siu, Kwan, Kowloon Hong Kong (CN)
(74) Representative: Murray, Adrian D'Coligny

(57) **Abstract**

The present invention is concerned with a corn scraper. The scraper has a body (2) including a cylindrical wall (6) defining a channel with a first end and a second end opposite the first end. The channel is configured such that a core of a corn can pass. The second end is provided with a cutting edge (1) for cutting into the roots of kernels adhered to the core, and the cylindrical wall defines an internal surface provided with a screw thread (24,28) for guiding the core to rotatably pass through the cylindrical wall in a helical moving manner.

## Description

### FIELD OF THE INVENTION

The present invention is concerned with a culinary utensil and particularly but not limited to a corn scraper or corn cutter.

### BACKGROUND OF THE INVENTION

There are a variety of culinary utensils for processing different foodstuffs. For example, there are special tools for assisting removal of kernels from the core of a corn. While the technology of removing kernels from corns in large scale commercial settings (e.g. large food processing factories) has developed to a reasonable level, removal kernels from the core of a corn in a domestic setting or in small restaurants can be a challenge without the assistance of automated machineries. As such, preparing fresh kernels for cooking in a small scale domestically or in boutique restaurants can be difficult and/or time consuming. This is particular so for people with weaker hands.

US Patent No. 4,885,842 discloses a hand tool for removing kernels from the core of a corn. While this hand tool is workable to a certain extent, considerable force is required to push the corn downwardly in use. A user with weaker hands would not be able to simultaneously squeeze the legs together and push the corn hard enough to remove the kernels from the core.

The present invention seeks to address the above described problems or at least to provide an alternative to the public.

### SUMMARY OF THE INVENTION

According to a first aspect of the present invention, there is provided a corn scraper comprising a body including a cylindrical wall defining a channel with a first end and a second end opposite the first end and through which a core of a corn can pass, the second end provided with a cutting edge for cutting into the roots of kernels adhered to the core, and said cylindrical wall defining an internal surface provided with a screw thread for guiding the core to rotatably pass through the cylindrical wall in a helical moving manner, whereby as the core is guided to pass through the cylindrical wall the kernels are being removed from the core at the cutting edge. With this arrangement, the kernels can be removed from the core in go without having to remove the kernels in one or two rows at a time.

Preferably, the corn scraper may comprise a pair of handles extending from the first end away from the cylindrical wall for assisting rotational movement of the scraper relative to the corn in use. In a specific embodiment, the handles and the cylindrical walls may be integrally formed. In another embodiment, the handles and the cylindrical walls may be integrally formed of stainless steel. Alternatively, the cylindrical wall may be made of stainless steel and the handles may be made of a plastic(s) material.

The corn scraper is preferably configured such that the diameter of the cylindrical wall is just slightly larger than that of the core to ensure that the cylindrical wall can tight fit over the core of a typical ear of corn. In a specific embodiment, the width of the cylindrical wall or substantially circular opening of the cylindrical wall may range from 25mm to 35mm.

In an embodiment, the cutting edge may take the form of serrated teeth distributed along the second end of the channel.

In one embodiment, when the cylindrical wall be positioned with the first end pointing upwardly and when viewed from above, the screw thread may be positioned to slant downwardly at an angle from left to right or in a clockwise manner. In use, this configuration allows the scraper to rotate clockwise in relation to the corn, or "screw" across the length of the corn. In a similar embodiment, the scraper may comprise two screw threads arranged on opposite side at the internal surface. The presence of the two screw threads can facilitate engagement of the scraper with the corn in a kernel removing exercise.

In a preferred embodiment, the screw thread may be welded to the internal surface. In another embodiment, the screw thread may be integrally formed with part of the cylindrical wall bent into the channel and forming a guide for the core. However the thread is formed, the screw thread may preferably be sharpened so that it can more easily cut into the corn.

The screw thread may be positioned generally mid-way between the first and second ends of the channel.

According to a second aspect of the present invention, there is provided a culinary utensil for removing kernels from the core of a corn comprising a body including a cylindrical wall member having a cutting edge for cutting into the roots of kernels adhered to the core and a screw thread extended from an internal surface of said cylindrical wall for guiding the core to rotatably pass through the wall in a helical moving manner, whereby as the core is guided to pass via the wall the kernels are being removed from the core at the cutting edge.

Preferably, the culinary utensil may comprise a pair of handles extending from the first end away from the cylindrical wall for assisting movement of the scraper relative to the corn in use.

In an embodiment, the handles may define a longitudinal axis which is arranged in perpendicular with a longitudinal axis defined by the cylindrical wall.

In a preferred embodiment, the utensil may comprise two screw threads arranged on opposite side at the internal surface.

The corn scraper may be configured with the cutting edge pointing in a direction and the direction of movement of the corn when being processed is in the opposite direction.

In one embodiment, the cutting edge or a blade forming the cutting edge and the cylindrical wall may be integrally formed.

According to a third aspect of the present invention, there is provided with a method of making a corn scraper as description above, comprising a step of forming the screw thread by welding the screw thread to the internal surface of the wall, or forming or bending the screw thread inwardly out of the wall.

### BRIEF DESCRIPTION OF THE DRAWINGS

Some embodiments of the present invention will now be explained, with reference to the accompanied drawings, in which:-
Fig. 1 a is a top perspective view of an embodiment of a corn scraper according to the present invention, Fig. 1b is a side view of the scraper of Fig. 1a, and Fig. 1c is a cross section view of the scraper of Fig. 1a;
Fig. 2a is a bottom perspective view of the scraper of Fig. 2a, and Fig. 2b schematically shows a half portion of the scraper of Fig. 1a;
Fig. 3a is similar to Fig. 2c, and Fig. 3b shows an enlarged view of a portion of the half portion of the scraper shown in Fig. 3a;
Fig. 4a is a top view of the scraper of Fig. 1a, and Fig. 4b is a side view of the scraper of Fig. 4b; and
Fig. 5a is a cross section view of the scraper of Fig. 4a taken at X-X', Fig. 5b is a bottom view of the scraper of Fig. 4a.

### DETAILED DESCRIPTION OF PREFERRED EMBODIMENTS OF THE INVENTION

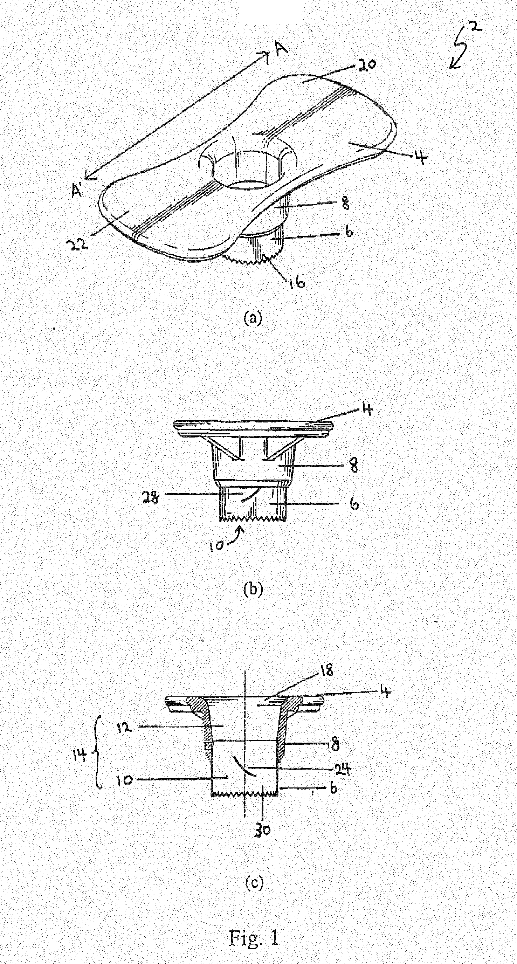

The present invention is concerned with a corn scraper. Figs. 1a to 1c illustrate an embodiment of a corn scraper, generally designated 2. The corn scraper 2 comprises two main parts, namely a cylindrical wall component 4 and a handle component 6.

In this embodiment, the cylindrical wall component 4 is made of stainless steel while the handle component 6 is made of a plastic(s) material. From the figures, it can be understood that a lower end of the handle component 6 takes the form of a sleeve 8 and fits over a top end of the cylindrical wall component 6. Once fitted over, the two components 4, 6 are securely connected together by, for example, welding or snapfitting.

The cylindrical wall component or the cylindrical wall 6 defines a channel 10. The handle component or the handle 4 also defines a channel 12 flushing with the channel 10 of the cylindrical wall 6. The channels 10, 12 thus form a longer continuous channel 14. One end of the cylindrical wall 6, or the lower end as shown in the figures, is provided with a sharp cutting edge 16. In this embodiment, the sharp cutting edge 16 is made of a number of sharp teeth pointing downwardly or away from the handle 4. An upper opening 18 of the handle 4 has a slightly larger diameter which provides a tapered flange for facilitating exit of the core of a corn in use.

The handle 4 is generally elongate in shape and defines a longitudinal axis A-A'. The handle 4 has a pair of wings 20, 22 on opposite sides thereof. It is envisaged that in use the handle 4 and the wall 6 together can be caused to rotate relative to an ear of a corn when the fingers of a user rotatably act on the sides of the wings 20, 22.

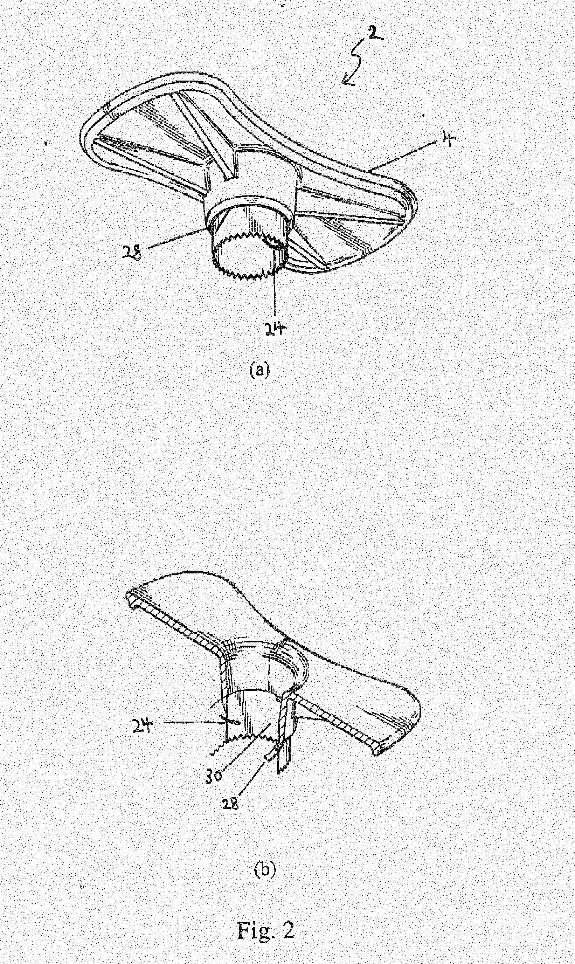

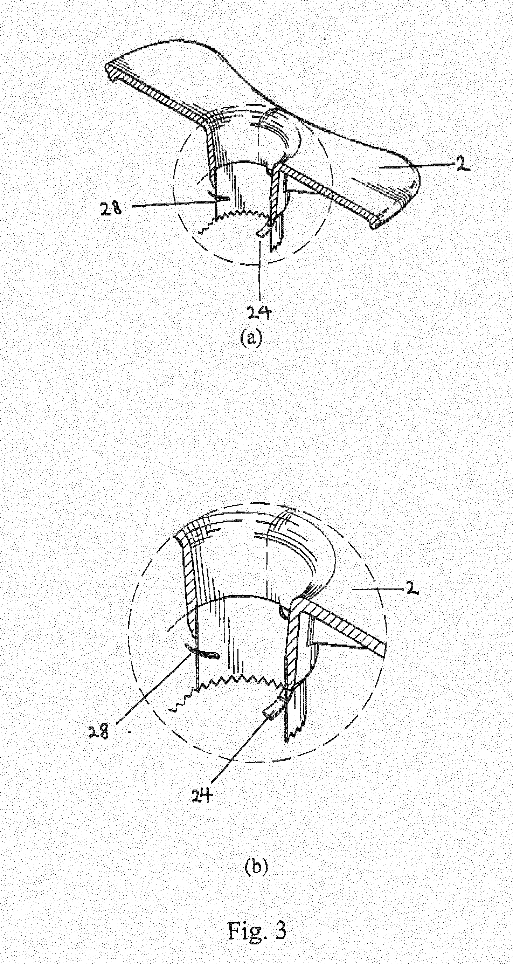

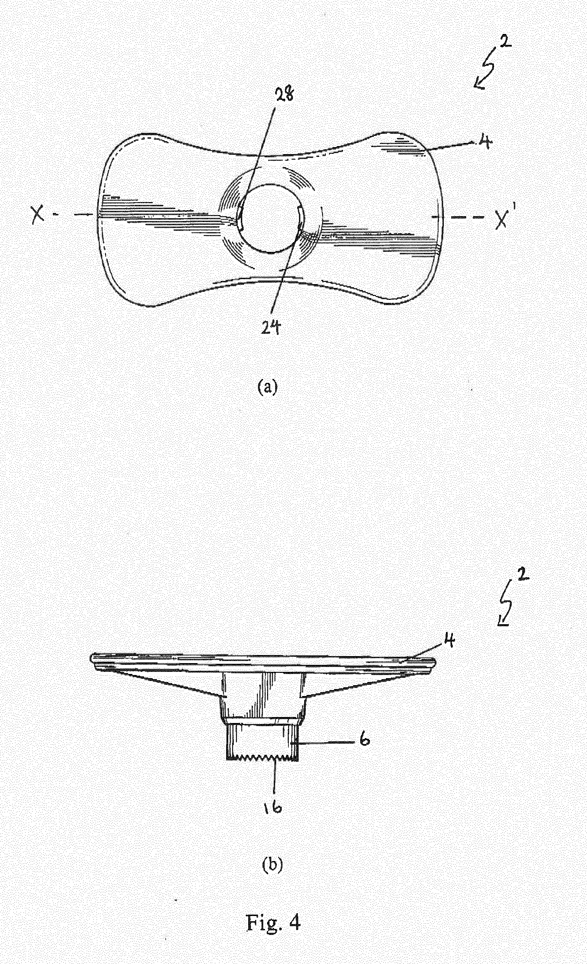

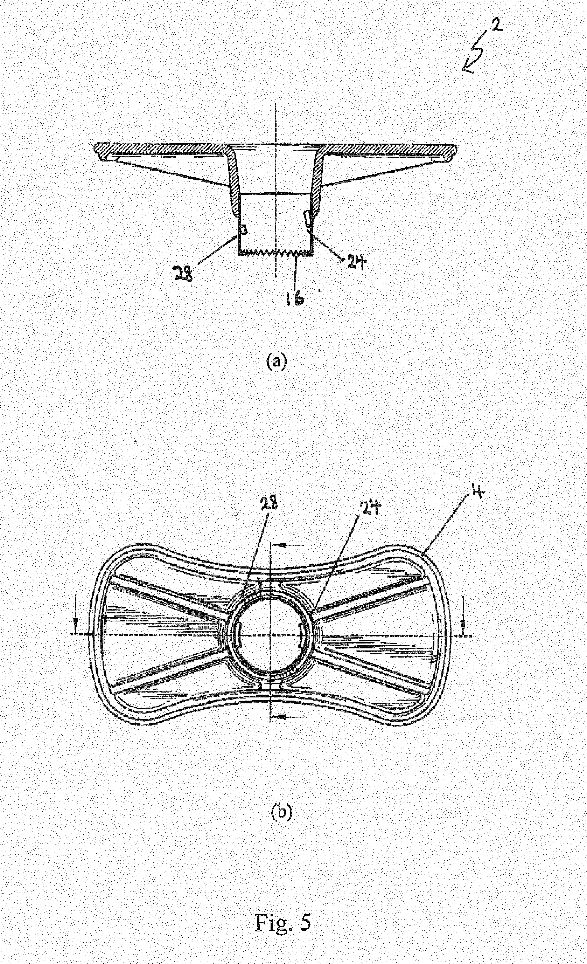

As shown in Fig. 1 b-c, Figs. 2a-b, Figs. 3a-b, Fig. 4a and Figs. 5a-b, the wall 6 is provided with a pair of screw threads 24, 28 adhered or welded on opposite sides of the internal surface 30 thereof. Each of the threads 24, 28 is relatively short, and in this embodiment it has a length of about 1 cm. However, in other embodiments the thread (24, 28) may be of any suitable length. Each thread (24, 28) is configured such that when the scraper 2 is viewed from above, e.g. in Figs. 3a-b and Fig. 4a, the thread 24, 28 is slanted downwardly from left to right. The thread 24, 28 is also configured to provide a sharp or tapered cutting edge.

In this embodiment, the width of the cylindrical wall 6 or the diameter of the opening of the cylindrical wall 6 is about 30mm. This dimension suits the size of many corn types. Studies have shown the diameter may be from 25mm to 35mm and such scraper can fit most corn types and perform satisfactorily. If a certain corn type is particularly larger or small, different sizes of a corn scraper according to the present invention would be needed although the different sizes would not affect the broad inventive concept or functioning of the scraper.

In use, the corn scraper 2 may be held by one end and an ear of a corn to be processed is held by the other hand. The scraper 2 is then positioned above the corn with the cutting edge 16 pointing downwardly at one end of the corn. The scraper 2 is then downwardly pressed such that the cutting edge 16 engages the end of the corn. The cylindrical wall 6 is dimensioned such that the cutting edge 16 will engage at the roots of the kernels of the corn located at one end thereof. Once the cutting edge 16 engages with the roots of the kernels of the corn, the threads 24, 28 also engage with the core. Then on rotating the scraper 2, due to the threads the scraper 2 is driven down further towards the core. Also due to the configuration of the wall 6 and the position of the threads 24, 28, the scraper 2 moves in a helical or spiralling manner. During the helical or spiralling movement, kernels are removed from the core at the cutting edge 16 while the core passes through the channel 14, 12, 10 and exit at the top end 18 of the scraper 2. It can be understood that unlike conventional corn scrapers which typically removed kernels in one or two rows at a time, a scraper according to the present invention can remove most if not all kernels once when the core passes through the channel 14. The corn scraper 2 may be used in different ways however. For example, a user may hold an ear of corn horizontally and position the scraper 2 such that the longitudinal axis of the handle 4 lies vertically. Nevertheless, whichever way the corn and the scraper 2 are held in use the principle of operation remains unchanged.

In this embodiment, the threads 24, 28 are short strips of stainless steel welded to the internal surface of the wall 30 although in other embodiments the threads 24, 28 may be formed by bending a part of the wall 6 into the channel 10. However the threads 24, 28 are formed, the threads 24, 28 should be sharp enough to facilitate "screwing" the scraper 2 through an ear of corn.

It should be understood that certain features of the invention, which are, for clarity, described in the content of separate embodiments, may be provided in combination in a single embodiment. Conversely, various features of the invention which are, for brevity, described in the content of a single embodiment, may be provided separately or in any appropriate sub-combinations. It is to be noted that certain features of the embodiments are illustrated by way of non-limiting examples. Also, a skilled person in the art will be aware of the prior art which is not explained in the above for brevity purpose.

## Claims

1. A culinary utensil for removing kernels from the core of a corn comprising a body including a cylindrical wall member having a cutting edge for cutting into the roots of kernels adhered to the core and a screw thread extended from an internal surface of said cylindrical wall for guiding the core to rotatably pass through the wall in a helical moving manner, whereby as the core is guided to rotatably pass via the wall the kernels are being removed from the core at the cutting edge.

2. A culinary utensil as claimed in Claim 1, comprising a pair of handles extending from the first end away from the cylindrical wall for assisting movement of the scraper relative to the corn in use.

3. A culinary utensil as claimed in Claim 2, wherein the handles defines a longitudinal axis which is arranged in perpendicular with a longitudinal axis defined by the cylindrical wall.

4. A culinary utensil as claimed in any one of Claims 1 to 3, comprising two said screw threads arranged on opposite side at the internal surface.

5. A culinary utensil as claimed in any one of Claims 1 to 4, wherein the cutting edge points in a direction and the direction of movement of the corn when being processed is in the opposite direction.

6. A culinary utensil as claimed in any one of Claims 1 to 5, wherein the cutting edge or a blade forming the cutting edge and the cylindrical wall are integrally formed.

7. A culinary utensil as claimed in Claim 1 or 2, wherein said utensil is a corn scraper comprising a body including a cylindrical wall defining a channel with a first end and a second end opposite the first end and through which a core of a corn can pass, the second end provided with a cutting edge for cutting into the roots of kernels adhered to the core, and said cylindrical wall defining an internal surface provided with a screw thread for guiding the core to rotatably pass through the cylindrical wall in a helical moving manner, whereby as the core is guided to pass through the cylindrical wall the kernels are being removed from the core at the cutting edge.

8. A corn scraper as claimed in Claim 7, wherein the handles and the cylindrical walls are integrally formed, preferably of stainless steel.

9. A corn scraper as claimed in Claim 7 or 8, wherein the cylindrical wall is made of stainless steel and the handles are made of a plastic(s) material.

10. A corn scraper as claimed in any one of Claims 7 to 9, wherein the diameter of the cylindrical wall is configured to make a tight fit over the core of a typical ear of corn, and the width of the cylindrical wall or substantially circular opening of the cylindrical wall preferably ranges from 25mm to 35mm.

11. A corn scraper as claimed in any one of Claims 7 to 10, wherein the cutting edge takes the form of serrated teeth distributed along the second end of the channel.

12. A corn scraper as claimed in any one of Claims 7 to 11, wherein when the cylindrical wall is positioned with the first end pointing upwardly and viewed from above the screw thread is positioned to slant downwardly at an angle from left to right or in a clockwise manner.

13. A corn scraper as claimed in Claim 12, comprising two said screw threads arranged on opposite side at the internal surface.

14. A corn scraper as claimed in any one of Claims 7 to 13, wherein said screw thread:
a. is welded to the internal surface,
b. is integrally formed with the cylindrical wall and is bent into the channel to form a guide for the core, and / or
c. is positioned generally mid-way between the first and second ends of the channel.

15. A method of making a corn scraper as claimed in any one of Claims 1 to 14, comprising a step of forming the screw thread by welding the screw thread to the internal surface of the wall, or forming or bending the screw thread inwardly out of the wall.
